Europäisches Patentamt

European Patent Office

Office européen des brevets

(11) Veröffentlichungsnummer: **0 373 422 B1**

## (12) EUROPÄISCHE PATENTSCHRIFT

(45) Veröffentlichungstag der Patentschrift: **23.06.93**

(51) Int. Cl.5: **B23K 11/00**

(21) Anmeldenummer: **89122063.4**

(22) Anmeldetag: **29.11.89**

(54) Anordnung zum Überwachen der Güte von elektrischen Schweissungen.

(30) Priorität: **16.12.88 CH 4655/88**

(43) Veröffentlichungstag der Anmeldung:
**20.06.90 Patentblatt 90/25**

(45) Bekanntmachung des Hinweises auf die
Patenterteilung:
**23.06.93 Patentblatt 93/25**

(84) Benannte Vertragsstaaten:
**BE CH DE ES FR GB GR IT LI NL SE**

(56) Entgegenhaltungen:
**EP-A- 0 014 271**
**EP-A- 0 153 298**
**CH-A- 653 786**
**DE-A- 3 545 158**
**DE-C- 3 902 308**

**FUNDAMENTALS OF TEMPERATURE, PRES-
SURE, AND FLOW MEASUREMENTS, Dritte
Auflage, Kapitel 10, 1984, Seiten 172-191,
John Wiley & Sons, New York, US; R.P. BE-
NEDICT * Seiten 175-177: "Confidence Interval" und "Sets of very large N";**

(73) Patentinhaber: **ELPATRONIC AG**
**Baarerstrasse 112**
**CH-6300 Zug(CH)**

(72) Erfinder: **Röösli, Hans**
**Gutrainstrasse 37**
**CH-8303 Bassersdorf(CH)**

## Beschreibung

Die Erfindung betrifft eine Anordnung zum Ueberwachen der Güte von elektrisch geschweissten Längsnähten an Zargen zur Dosenherstellung, mit Wenigstens einer Einrichtung zum Ermitteln wenigstens eines ersten Schweissparameterprofils, mit einem Speicher zum Speichern des ersten Schweissparameterprofils und mit einem Vergleicher zum Vergleichen des ersten Schweissparameterprofils mit einem später gemessenen zweiten Schweissparameterprofil zum Bestimmen von deren Uebereinstimmungsgrad.

Bei einer bekannten Anordnung dieser Art (EP-A-0 153 298) wird angestrebt, die zeitliche Aenderung der Schweissparameter bei Punktschweissungen exakt zu erfassen und einem Sollverlauf eines Schweissvorganges zugeordnete Daten genau festzulegen, wobei verschiedene Randbedingungen, insbesondere der Materialart, der Materialstärke, einer Beschichtung des Materials, der Grundparameter der jeweiligen Schweissmaschine usw., zu berücksichtigen und die erhaltenen Daten nach verschiedenen Programmen zu verknüpfen und auszuwerten sind. Zu diesem Zweck wird bei der bekannten Anordnung an einem Probewerkstück mit mehreren Schweissstellen ein günstiger Verlauf der Schweissparameter für jede einzelne Schweissstelle ermittelt und gespeichert. Der Speicher ist über einen Mikroprozessor programmierbar, so dass es möglich ist, einen als besonders günstig erkannten Schweissverlauf auszuwählen und sein Datenprofil als Sollwertprofil für folgende gleiche Schweissvorgänge zu speichern. Hierbei bedeutet "Datenprofil" den zeitlichen Momentanwert-Verlauf von Messwerten für einen einzelnen Schweisspunkt, und mit "Schweissvorgang" ist die einzelne Punktschweissung gemeint. Im Serienbetrieb der Schweissmaschine werden dann für die jeweilige Schweissstelle die zugeordneten Vergleichsdaten, die als Sollwertprofil in dem Speicher festgehalten sind, abgerufen. Durch das Abfragen der Momentanwerte des Schweissparameters im Schweissbetrieb entsteht ein (zeitliches) Datenprofil, das in einem Vergleicher mit dem gespeicherten, dem Sollverlauf des Schweissvorganges entsprechenden Datenprofil verglichen wird. Entsprechend dem ermittelten Uebereinstimmungsgrad werden Ausgangssignale erzeugt. Wird ein Mindestgrad an Uebereinstimmung festgestellt, kann die Schweissung als "gut" gewertet werden. Es ist aber nicht angegeben, wie der Grenzwert für den Mindestgrad an Uebereinstimmung zwischen Soll- und Ist-Verlauf, für den die Schweissung als "gut" gewertet werden kann, eingestellt wird. Anzunehmen ist, dass dabei ein Festwert eingestellt wird, der einen bestimmten Abstand vom Sollverlauf hat. Damit ein eingestellter Grenzwert für die gesamte Schweissnahtlänge benutzt werden könnte, ohne dass zu viele gute Schweissungen als "schlecht" ausgeworfen werden, müsste der eingestellte Grenzwert relativ gross gewählt werden. Andernfalls würden am Schweissnahtanfang und -ende üblicherweise auftretende grosse Abweichungen ständig zu Fehlauswürfen führen. Die bekannte Einrichtung ist daher bei der Güteüberwachung wenig sensibel und wenig treffsicher.

In einem weiteren zum Stand der Technik gehörenden Dokument (DE-A-35 45 158) wird ein adaptives Regelverfahren für Schweissprozesse beschrieben, wobei zeitlich aufeinanderfolgende Schweissvorgänge laufend "auf Sollwerte geregelt" werden. Dabei werden statistische Auswerteverfahren angewendet, jedoch keine örtlich über ein Werkstück ausgedehnte Werteprofile miteinander verglichen.

Aufgabe der Erfindung ist es, bei einer Anordnung der eingangs genannten Art die Sensibilität und die Treffsicherheit bei der Güteüberwachung zu steigern.

Diese Aufgabe ist erfindungsgemäss dadurch gelöst, dass die genannte Einrichtung zum Ermitteln wenigstens eines ersten Schweissparameterprofils eine Auswerteeinrichtung enthält zum statistischen Auswerten von gemessenen Schweissparameterwerten von über die Naht- bzw. Zargenlänge sich erstrek- kenden Profilen, wobei die Auswerteeinrichtung versehen ist
- mit einer ersten Recheneinrichtung, die eingerichtet ist
    - zur Ermittlung eines mittleren Schweissparameterprofils aus einer Anzahl von für gut befundenen Zargen,
    - zur Ermittlung der zu Punkten i des mittleren Schweissparameterprofils gehörenden Standardab- weichungen $\sigma_i$ der Schweissparameterwerte, und
    - zur Ermittlung des zweiten Schweissparameterprofils für anschliessend hergestellte Zargen,
- mit einem Speicher für das genannte mittlere Schweissparameterprofil und die zugehörigen Standard- abweichungen $\sigma_i$,
- mit einer zweiten Recheneinrichtung zur Ermittlung eines das mittlere Schweissparameterprofil umhüllenden Auswurfgrenzbandes, das als Produkt der aus dem mittleren Schweissparameterprofil sich ergebenden Mittelwerte der Schweissparameterwerte und der mit einem Empfindlichkeitsfaktor multi- plizierten Standardabweichung $\sigma_i$ gebildet ist,
und dass ferner der genannte Vergleicher dazu eingerichtet ist, für die anschliessend hergestellten Zargen festzustellen, ob das für diese ermittelte zweite Schweissparameterprofil innerhalb des Auswurfgrenzbandes liegt.

Erfindungsgemäss wird also nicht an einer Probezarge ein Soll-Datenprofil des Absolutwertes des Schweissparameters oder der Aenderungen des Schweissparameters ermittelt, sondern in einer Lernphase wird anhand von mehreren für gut befundenen Zargen der Mittelwert des Schweissparameters über der Zargenlänge ermittelt, und aufgrund der dabei beobachteten Streuung der Messwerte werden die beiden das Auswurfgrenzwertband festlegenden Auswurfgrenzwertkurven ermittelt, indem eine bestimmte Empfindlichkeit gewählt wird, zum Beispiel derart, dass nur jede zehntausendste gute Zarge ausgeworfen wird.

In der erfindungsgemässen Anordnung werden also die gemessenen Schweissparameter bezüglich ihres statistischen Verhaltens untersucht. In die Statistik einbezogen werden nur "gute" Zargen. Nachdem die Schweissmaschine so eingestellt worden ist, dass die produzierten Zargen die gewünschte Qualität aufweisen, wird in der Lernphase eine erste Statistik aufgebaut. Die während dieser Lernphase produzierten Dosen werden mindestens grob auf ihre Qualität überprüft (z.B. durch visuelle Kontrolle, Schliffbilder, Aufreisstests, Röntgenuntersuchung usw.). Untersuchungen haben dabei ergeben, dass die für die einzelnen Schweissstellen gemessenen Schweissparameterwerte normalverteilt sind, d.h. Gauss-Verteilung oder Normalverteilung aufweisen. Das bedeutet, dass die statistischen Eigenschaften der Schweissparameterwerte (Verteilungskurve) durch Mittelwert und Varianz bestimmt sind.

Ein wesentlicher Unterschied der erfindungsgemässen Anordnung gegenüber der erstgenannten, bekannten Anordnung ist also darin zu sehen, dass durch Ermitteln eines das mittlere Schweissparameterprofil umhüllenden Auswurfgrenzwertbandes anhand mehrerer für gut befundener Zargen und einer wählbaren Wahrscheinlichkeit für den Auswurf einer an sich guten Zarge eine bessere Sensibilität und eine optimale Treffsicherheit erzielt werden. Zu diesem Zweck braucht der Benützer der Anordnung lediglich die Empfindlichkeit festzulegen. Im allgemeinen Fall kann die Empfindlichkeit für das Ueberschreiten des unteren bzw. oberen Grenzwertes separat eingestellt werden. Das Kriterium dafür ist vorzugsweise die Anzahl von Fehlauswürfen pro Million Schweisspunkte. Die Frage, wie viele Fehlauswürfe zulässig sind, lässt sich jeweils anhand der Qualitätsanforderungen beantworten.

Nach der Erfindung lässt sich für jede bestimmte Produktionsbedingung, Blechsorte, Maschineneinstellung od. dgl. ein optimales Toleranzband bestimmen. Im Gegensatz zur erstgenannten, bekannten Anordnung, wo einfach mit je einem Potentiometer ein konstanter oberer und unterer Grenzwert vorgegeben wird, wird gemäss der Erfindung mit einem an die Produktionssituation angepassten Toleranzprofil über die Nahtlänge gearbeitet. Dieses Toleranzprofil gestattet, im Anfangs- und im Endbereich der Zargenlänge, wo die Streuungen der gemessenen Schweissparameterwerte erfahrungsgemäss besonders gross sind, mit einem breiteren Auswurfgrenzwertband als beispielsweise über der Mitte der Zargenlänge zu arbeiten, wo die Streuung erfahrungsgemäss wesentlich geringer ist.

Mittels der bei der Erfindung angewendeten statistischen Auswertung lässt sich eine automatische Adaptation an die Gütekonstanz der getesteten Zargen erreichen. Auch wenn zum Beispiel schlechtes Blechmaterial oder "wacklige" Maschinen stark streuende Messwerte verursachen, wird dies automatisch durch den grösseren Streuungswert erfasst, und die Grenzwerte werden grösser. Das, was die Anordnung nach der Erfindung hier automatisch berücksichtigt, macht sonst oft auch der geübte Operator, wenn er manuell einen Grenzwert einstellt, indem er die Einstellung so vornehmen wird, dass sporadisch eine an sich gute Zarge ausgeworfen wird, aber doch nicht allzu häufig.

Nachdem bei der Lernphase eine erste Statistik der guten Zargen erstellt und damit die Auswurfgrenzwerte festgelegt worden sind, werden während der gesamten Produktion die für gut befundenen Zargen laufend statistisch auf die oben erwähnte Weise durch die Anordnung nach der Erfindung weiter verfolgt. Dadurch ist es auch möglich, eine Gütedarstellung zu produzieren.

Vorteilhafte Ausgestaltungen der Erfindung bilden den Gegenstand der abhängigen Ansprüche.

Ausführungsbeispiele der erfindungsgemässen Anordnung werden im folgenden unter Bezugnahme auf die Zeichnungen näher beschrieben. Es zeigen:

Fig. 1 schematisch den Aufbau einer erfindungsgemässen Anordnung zum Ueberwachen der Güte von elektrisch geschweissten Längsnähten an Zargen zur Dosenherstellung,

Fig. 2 als Einzelheit ein Blockschaltbild einer statistischen Auswerteeinrichtung nach Fig. 1,

Fig. 3 und 4 Erläuterungsdiagramme, und

Fig. 5a - 5d Schemata zur Erläuterung einer mit Hilfe der erfindungsgemässen Anordnung durchführbaren laufenden Güteüberwachung.

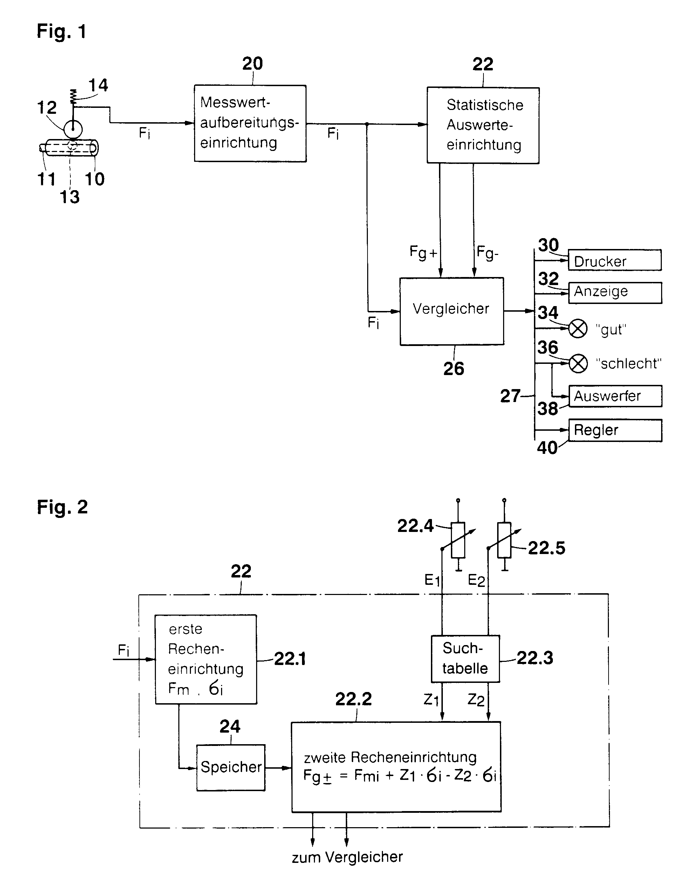

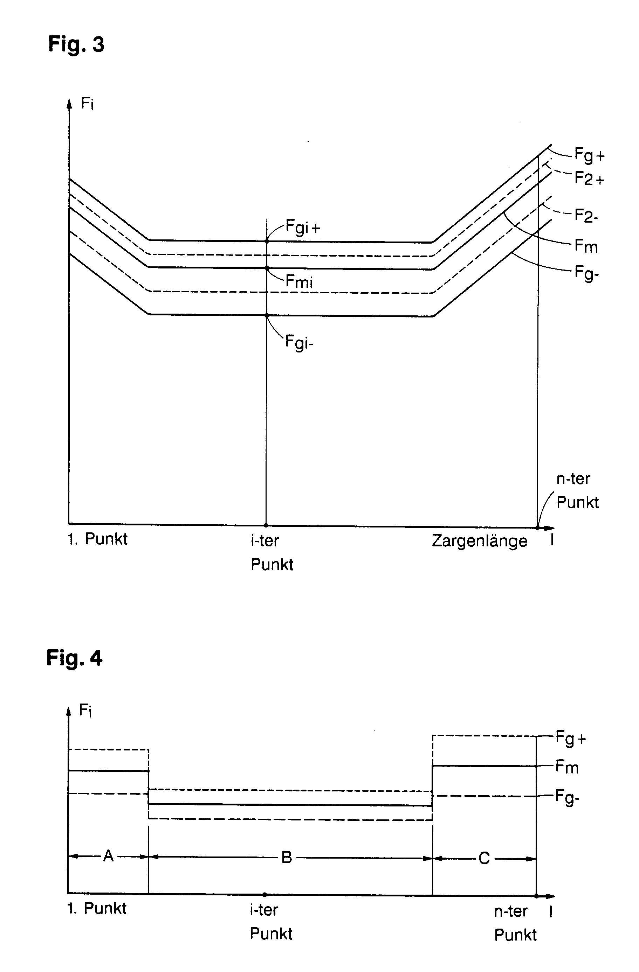

Im folgenden wird eine Anordnung zum Überwachen der Güte von elektrischen Schweißungen an Zargen 10 zur Dosenherstellung in Verbindung mit einer Wechselstromnahtschweißvorrichtung beschrieben, welch letztere gemäß der schematischen Teildarstellung in Fig. 1 einen Schweißarm 11 aufweist, auf dem die Zargen 10 vorwärts bewegt (in Fig. 1 nach rechts) und dabei im Bereich ihrer Längsnaht zwischen einer an dem Schweißarm 11 befestigten unteren Schweißrolle 13 und einer mittels einer Feder 14 angedrückten oberen Schweißrolle 12 aufgrund eines zwischen den Elektrodenrollen durch das Zargenmaterial fließenden Schweißstroms miteinander verschweißt werden. Jede Schweißstromhalbwelle führt zur Erzeugung eines Schweißpunktes. In aufeinanderfolgenden Schweißstromhalbwellen hat der Schweißstrom die eine bzw. andere Polarität. Bezüglich weiterer Einzelheiten wird auf den Firmenprospekt der Soudronic AG, "Warum SOUDRONIC Frequenzwandler-Schweissmaschinen", September 1979, zum Beispiel S.6-8, verwiesen.

An der Maschine wird, z.B. bei der oberen Elektrodenrolle 12, gemäß der schematischen Darstellung in Fig. 1 ein(oder mehrere) Schweißparameter $F_i$ durch Sensoren (nicht dargestellt) gemessen. Der Schweißparameter $F_i$ kann der Schweißstrom, die Spannung an der Schweißstelle, das Produkt dieser Größen (Leistung/Energie), die Nahttemperatur, der Weg eines Pendelrollenkopfes, welcher die obere Elektrodenrolle 12 trägt, od.dgl. sein. Jeder Schweißparameter $F_i$ wird in einer Meßwertaufbereitungseinrichtung 20 derart vorverarbeitet, daß pro Schweißpunkt i (mit i = 1, 2, 3 ... n) ein digitaler Zahlenwert erzeugt wird. Eine solche Vorverarbeitung kann darin bestehen, daß die elektrischen Signale der Sensoren zwecks Eliminierung von überlagerten Störsignalen gefiltert werden. Eine andere Art der Meßwertaufbereitung kann darin bestehen, das erwähnte Produkt aus Schweißstrom und Spannung zu bilden und über der Dauer eines Schweißpunktes zu integrieren (Punktenergie). Diese vorverarbeiteten Meßwerte sind gemeint, wenn im folgenden von Schweißparametern oder Schweißparameterwerten oder Punktwerten die Rede ist. In der im folgenden beschriebenen Anordnung werden die von den einzelnen Sensoren gelieferten und auf die vorstehend beschriebene Art aufbereiteten Punktwerte pro Kriterium (Energie, Temperatur usw.) bezüglich ihres statistischen Verhaltens untersucht.

Zu diesem Zweck werden die Schweißparameterwerte einer statistischen Auswerteeinrichtung 22 zugeführt. Gemäß der ausführlicheren Darstellung in Fig. 2 enthält die statistische Auswerteeinrichtung 22 eine erste Recheneinrichtung 22.1, deren Eingang der Schweißparameterwert $F_i$ zugeführt wird und deren Ausgang mit dem Eingang eines Speichers 24 verbunden ist. Der Ausgang des Speichers 24 ist mit einem Eingang einer zweiten Recheneinrichtung 22.2 verbunden. Diese hat einen weiteren Eingang, der mit dem Ausgang einer Eingabeeinrichtung 22.3 verbunden ist, welche eine Suchtabelle umfaßt. Die Suchtabelle enthält eine Anzahl von Empfindlichkeitsfaktoren, die entsprechend gewählten Empfindlichkeiten $E_1$ und $E_2$ über die Eingänge der Eingabeeinrichtung 22.3 adressierbar sind. Die Wählbarkeit der Empfindlichkeiten $E_1$, $E_2$ ist symbolisch durch Potentiometer 22.4, 22.5 dargestellt. Die Suchtabelle kann auch durch eine Berechnung mittels Mikroprozessoren (nicht dargestellt) ersetzt werden. Die zweite Recheneinrichtung 22.2 hat zwei Ausgänge, die zu zwei Eingängen eines Vergleichers 26 (Fig. 1) führen. An einem dritten Eingang empfängt der Vergleicher 26 die Schweißparameterwerte $F_i$. Der Ausgang des Vergleichers 26 ist mit einem Datenbus 27 verbunden, an den parallel Signalverarbeitungseinrichtungen 30, 32, 34, 36, 38, 40 angeschlossen sind, die im folgenden noch näher erläutert sind.

Zunächst ermittelt die erste Recheneinrichtung 22.1 ein mittleres Schweißparameterprofil $F_m$ aus den Schweißparameterwerten $F_i$, das in dem Speicher 24 gespeichert wird und in Form von zwei verschiedenen Kurven in den Fig. 3 und 4 dargestellt ist.

Es gibt zwei Möglichkeiten, die Kurven $F_m$ zu bestimmen, nämlich als arithmetischen Mittelwert der absoluten Meßwerte oder als arithmetischen Mittelwert der zwischen jeweils zwei aufeinanderfolgenden Meßwerten gebildeten Differenz.

In einer Lernphase, für die üblicherweise 20 bis 100 Zargen benutzt werden, wird eine erste Statistik aufgebaut. An jeder Zarge wird der i-te-Punkt gemessen, und die in allen i-ten Punkten aller Zargen ermittelten Schweißparameterwerte werden gemittelt, was Mittelwerte $F_{mi}$ über der Zargenlänge I vom ersten bis zum n-ten Punkt ergibt (Fig. 3 und 4).

Die Schweißparameterwerte haben eine Normal- oder Gauß-Verteilung. Die Verteilungsfunktion ist charakterisiert durch den Mittelwert $F_m$ und die Standardabweichung $\sigma$. Mit dem Mittelwert $F_m$ und der Standardabweichung $\sigma$ ist eine Gauß-Kurve eindeutig definiert. Die Standardabweichung ist ein Maß dafür, wie stark die Meßwerte streuen, und begrenzt den Bereich, in welchem 66% aller Meßwerte liegen. Die beiden Stützpunkte der Standardabweichung (ein Stützpunkt in negativer Richtung auf einer Seite des Mittelwerts und ein Stützpunkt in positiver Richtung auf der anderen Seite des Mittelwerts) und der Mittelwert legen also eine Gauß-Kurve eindeutig fest. Bezüglich weiterer Einzelheiten wird auf das Handbuch "Statistische Methoden und ihre Anwendungen" von E. Kreyszig, Verlag Vandenhoeck & Ruprecht, Göttingen, zweiter, unveränderter Nachdruck der 7. Auflage, S. 125-129, verwiesen. Die erste Recheneinrichtung 22.1 berechnet für jeden Punkt i fortlaufend $F_{mi}$ und $\sigma_i$. Die Berechnung von $F_{mi}$ erfolgt, wie oben dargelegt, als arithmetischer Mittelwert. Die Berechnung von $\sigma_i$ erfolgt gemäß der Gleichung

$$\sigma_i = \sqrt{\frac{1}{m-1} \sum_{j=1}^{m} (F_{ij} - F_{mi})^2} \qquad (1)$$

4

wobei gilt

$\sigma_i$ = Standardabweichung im i-ten Punkt
m = Zahl der Zargen in der Lernphase
j = laufende Zarge
$F_{ij}$ = Stichprobenwert des i-ten Punktes der j-ten Zarge
$F_{mi}$ =

$$\frac{1}{m} \sum_{j=1}^{m} F_{ij}$$

Das Mittelwertprofil $F_m$ und das Profil der Standardabweichungen $\sigma_i$ werden in dem Speicher 24 gespeichert, aus welchem sie bei Bedarf durch die zweite Recheneinrichtung 22.2 abrufbar sind. Die zweite Recheneinrichtung 22.2 berechnet ein Auswurfgrenzwertband $F_{g\pm}$ aus folgenden Beziehungen

$$F_{gi+} = F_{mi} + z_1\,\sigma_i \qquad (2)$$

$$F_{gi-} = F_{mi} - z_2\,\sigma_i \qquad (3)$$

mit

i = 1, 2, 3...n und
$F_{gi}$ = Auswurfgrenzwert im i-ten Punkt der Schweißnaht,
$F_{mi}$ = Mittelwert des Schweißparameters im i-ten Punkt der Schweißnaht,
$z_1$ = Empfindlichkeitsfaktor oder reziprokes Maß der Empfindlichkeit für oberen Auswurfgrenzwert, und
$z_2$ = Empfindlichkeitsfaktor oder reziprokes Maß der Empfindlichkeit für unteren Auswurfgrenzwert,
$\sigma_i$ = Standardabweichung für den i-ten Punkt der Schweißnaht.

Gemäß den Eigenschaften der Normalverteilung besteht eine bestimmte Wahrscheinlichkeit, daß der Grenzwert $F_{gi+}$ oder $F_{gi-}$ überschritten wird. Je nach der Größe von $z\,\sigma_i$ werden auch mehr oder weniger häufig Zargen ausgeworfen, die an und für sich gut sind. Je kleiner $z\,\sigma_i$ ist, desto empfindlicher reagiert die Anordnung auf Defekte, es werden aber auch häufiger gute Zargen ausgeworfen.

In den folgenden Erläuterungen wird zur Vereinfachung ein Auswurfgrenzwertband angenommen, das zum mittleren Schweißparameterprofil $F_m$ symmetrisch ist, d. h. der Fall $E_1 = E_2 = E$ und $z_1 = z_2 = z$.

Das "gut/schlecht"-Kriterium wird aus der gewünschten Empfindlichkeit der Anordnung hergeleitet. Diese wird so definiert, daß ein vom Benutzer bestimmter Anteil guter Zargen als schlecht klassiert werden darf. Es wird also ein objektives Auswurfkriterium festgelegt, das hier als Empfindlichkeit E bezeichnet wird. Sie ist definiert als die Anzahl der Fehlauswürfe pro Million Zargen. Der Empfindlichkeitswert E = 100 bedeutet also 100 Fehlauswürfe pro 1 Million Zargen, oder, daß durchschnittlich jede zehntausendste Zarge versehentlich ausgeworfen wird. Bei einer Zargenschweißmaschine, die 600 Zargen pro Minutentakt produziert, bedeutet das, daß jede Viertelstunde eine gute Zarge versehentlich ausgeworfen wird.

Der Empfindlichkeitsfaktor z ist über die Potentiometer 22.4, 22.5 in der Suchtabelle 22.3, die eine Anzahl von in Frage kommenden Empfindlichkeitsfaktoren enthält, adressierbar. z ist der Reziprokwert der Empfindlichkeit E. Je größer z ist, um so unempfindlicher ist die Anordnung. In Frage kommende Werte für z ergeben sich aus dem erwähnten Handbuch, S. 128 und 129, wo zu entnehmen ist (mit $F_m$ für $\mu$ geschrieben):

Etwa 95 % aller Werte liegen zwischen $F_m - 2\sigma$ und $F_m + 2\sigma$,

etwa 99 3/4 % aller Werte liegen zwischen $F_m - 3\sigma$ und $F_m + 3\sigma$, und

etwa 99,9 % aller Werte liegen zwischen $F_m - 3,29\sigma$ und $F_m + 3,29\sigma$.

In diesen Fällen gilt also

z = 2

z = 3

z = 3,29.

Gemäß der Literatur, z.B. "Handbook of Mathematical Functions", Ed. M. Abramowitz und I. Stegun, Dover Publications, Inc., New York, Dezember 1972, S. 933, läßt sich z mit guter Näherung wie folgt berechnen:

5

$$z = \sqrt{-\frac{\pi}{2}\ln(1 - A^2)}$$

wobei

A = Wahrscheinlichkeit, daß Grenzwert nicht überschritten wird.

Sollen also z.B. 99,9999% aller Punkte innerhalb des (symmetrischen) Auswurfgrenzwertbandes liegen, ist A = 0,999999 und die Berechnung ergibt $z = 4,54$.

Aufgrund gemachter Erfahrungen wird für z ein wert zwischen 3 und 5 und vorzugsweise der Wert 4,54 gewählt. Der letztgenannte Wert entspricht 99,9999%, also dem Fall, in welchem pro 1 Million Schweißpunkten einer versehentlich als "schlecht" beurteilt wird. Bei 100 Schweißpunkten auf einer Zarge einer mittelgroßen Dose wird so durchschnittlich jede zehntausendste Zarge versehentlich ausgeworfen.

Die zweite Recheneinrichtung 22.2 entnimmt den adressierten Wert von z aus der Eingabeeinrichtung 22.3 und berechnet dann gemäß den Gleichungen (2) und (3) das Auswurfgrenzwertband, wobei die zugehörigen Werte von $F_{mi}$ jeweils dem Speicher 24 entnommen werden. Zwei so berechnete Auswurfgrenzwertkurven, die das Band oben und unten begrenzen, sind in den Fig. 3 und 4 jeweils mit $F_{g+}$ bzw. $F_{g-}$ bezeichnet. Die Auswurfgrenzwertkurven $F_{g+}$ und $F_{g-}$ werden in der zweiten Recheneinrichtung in einem nicht dargestellten Speicher abgespeichert und bei Bedarf an den Vergleicher 26 abgegeben.

Das vorstehend beschriebene Aufbereitungs- und Auswerteverfahren wird für die für gut befundenen 100 Zargen in der Lernphase durchgeführt. Anschließend, also während der Produktionsphase der Schweißmaschine, werden wie in der Lernphase die Schweißparameterwerte aufbereitet, anschließend aber vorzugsweise dem Vergleicher 26 zugeführt, der also für im Anschluß an die Lernphase hergestellte Zargen 10 feststellt, ob das für diese gemessene zweite Schweißparameterprofil, das, genauer gesagt, ebenfalls aus den entsprechenden Mittelwerten $F_{mi}$ gebildet wird, innerhalb des Auswurfgrenzwertbandes $F_{g\pm}$ liegt. Der Vergleicher 26 gibt ein vom Vergleichsergebnis abhängiges Ausgangssignal an die Signalverarbeitungseinrichtungen 30 bis 40 ab. Zu diesen gehören ein Drucker 30, der das Vergleichsergebnis ausdruckt, eine Anzeigeeinrichtung 32, die das Vergleichsergebnis anzeigt, eine Signallampe 34, die anzeigt, ob eine Zarge "gut" war, eine Anzeigelampe 36, die anzeigt, ob eine Zarge "schlecht" war, ein Auswerfer 38, der die Zarge gleichzeitig mit der Betätigung der Signallampe 36 auswirft, und ein Regler 40, der den gemessenen Schweißparameter korrigierend nachregelt, falls sich ein Abweichungstrend ergeben sollte, was weiter unten noch näher erläutert ist.

Aus der Tatsache, daß gewisse Fehlermechanismen sich dadurch äußern, daß mehrere aufeinanderfolgende Punkte statistisch signifikante Abweichungen verursachen, können weitere (tiefere) Grenzwerte wie folgt festgelegt werden:

$$F_2 = F_m + z\sigma_i,$$

wobei gilt, daß nur ein Defekt signalisiert wird, wenn $F_2$ bei zwei aufeinanderfolgenden Messungen überschritten wird, $F_3$ bei drei aufeinanderfolgenden Messungen, usw. Die Abweichungen $z\sigma_i$ können wiederum jeweils so definiert werden, daß beispielsweise jede tausendste gute Zarge ausgeworfen wird. Das Auswurfgrenzwertband $F_{2\pm}$ für $F_2$ ist in Fig. 3 gezeigt.

Stehen zwei isochrone Kriterien (z.B. Naht-Verquetschung und Punktenergie) zur Verfügung, ergibt sich eine weitere Möglichkeit der Grenzwertbildung derart, daß ein sogenannter Korrelationsgrenzwert $F_k$ definiert wird. Ein Auswurf erfolgt in diesem Fall, wenn für einen bestimmten Schweißpunkt beide Punktwerte ihren Korrelationsgrenzwert $F_k$ überschreiten.

Eine Vereinfachung des Verfahrens ergibt sich, wenn nicht wie in Fig. 3 für die Statistik jeder Punkt i ausgewertet wird, sondern Bereiche zusammengefaßt werden. In dem in Fig. 4 dargestellten Beispiel werden statt n nur drei Statistiken geführt, nämlich für die Bereiche A, B und C, also für Anfang, Mitte bzw. Ende der Zarge. Jeder Bereich umfaßt 10 bis 20 Schweißpunkte, die zur statistischen Auswertung zu einem Mittelwert pro Bereich zusammengefaßt werden.

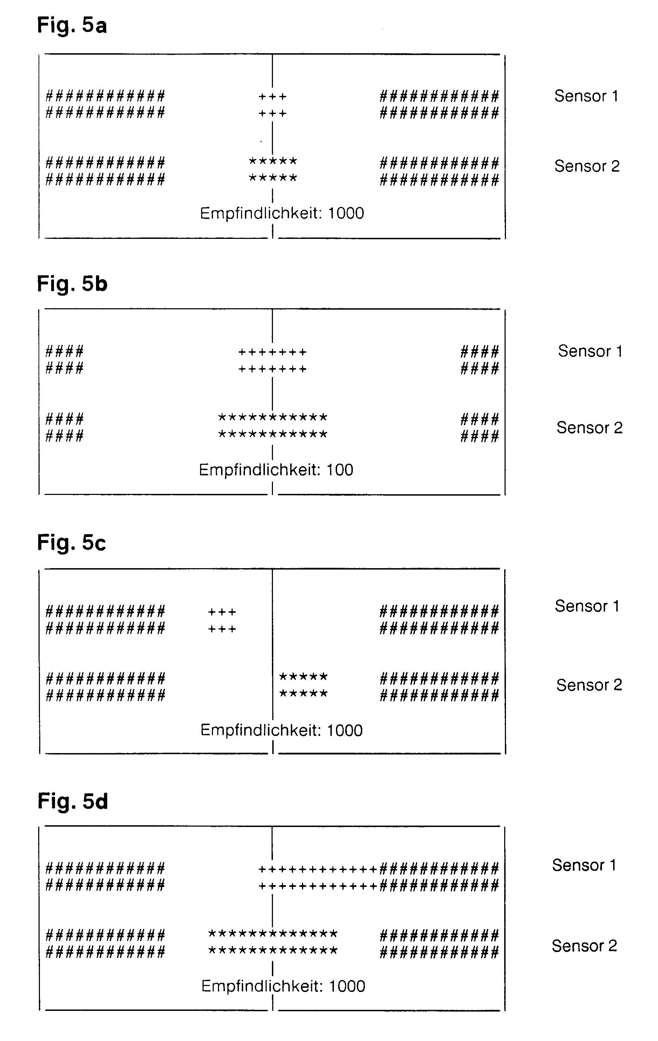

Die hier beschriebene Anordnung eignet sich zur laufenden Güteüberwachung, was im folgenden unter Bezugnahme auf die Fig. 5a, 5d beschrieben wird.

Nachdem durch die Lernphase eine erste Statistik der guten Zargen erstellt und damit die Auswurfgrenzwerte festgelegt worden sind, werden während der gesamten Produktion die für gut befundenen Zargen laufend statistisch nach den oben erwähnten Methoden weiter verfolgt. Damit ist es möglich, eine Güte-Darstellung zu produzieren.

Die Darstellung in Fig. 5a ist die Ausgangslage mit geringer Streuung und hoher Empfindlichkeit, E = 1000. Fig. 5b zeigt die Ausgangslage bei mittlerer Streuung und geringer Empfindlichkeit, E = 100.

Die Darstellungen gemäß den Fig. 5a und 5b zeigen also die Mittelwerte und die Streuung der Meßwerte bei der gewählten Empfindlichkeit E = 1000 bzw. E = 100. Die Streuung und die Empfindlichkeit sind relative Werte, deren physikalische Bedeutung dem Benutzer nicht bekannt zu sein braucht. Eine große Empfindlichkeit bedeutet eine höhere Wahrscheinlichkeit, daß hier und da auch eine gute Zarge ausgeworfen wird. Eine große Streuung kann verschiedene Ursachen haben: schlechtes Material, instabile Maschineneinstellung, Verschmutzung der Maschine usw.

Die Fig. 5c und 5d zeigen mögliche Veränderungen nach einer Ausgangslage gemäß Fig. 5a. Fig. 5c zeigt eine Drift der Messungen, und Fig. 5d zeigt einen driftenden Mittelwert und zunehmende Streuung, wobei der Sensor 1 Alarm auslöst. Das Wegdriften der Mittelwerte könnte folgende Ursachen haben:
- Drift der Sensoren 1, 2 infolge Maschinenerwärmung
- Veränderung einer Maschineneinstellung oder der Materialeigenschaften.

Die Veränderung in der Streuung könnte folgende Ursachen haben:
- Zunehmende Verschmutzung
- Etwas an der Schweißmaschine ist "wacklig" geworden.

Sobald ein Alarmwert erreicht wird (in Fig. 5d grafisch dadurch dargestellt, daß die durch Plussymbole dargestellten Meßwerte an der Begrenzung anschlagen), muß der Benutzer die Qualität der Produktion überprüfen. Ist die Qualität nach wie vor gut, kann er durch Drücken einer Funktionstaste "Lernen" wieder die Darstellung gemäß Fig. 5a erreichen. In diesem Fall sind die Abweichungen durch solche die Schweißqualität nicht beeinträchtigende Einflüsse hervorgerufen worden (z.B. Temperaturdrift der Meßanordnung). Dieser Alarmwert läßt sich z.B. so definieren, daß er gleich dem zehnfachen Wert der zugelassenen Ausschußquote ist.

Die durch die laufende Güteüberprüfung gebildeten Daten erlauben es, automatisch korrigierend einzugreifen, indem z.B. der Schweißstrom mittels des Reglers 40 derart nachgeregelt wird, daß die Mittelwerte wieder in die Ausgangsposition gemäß Fig. 5a zurückkehren.

**Patentansprüche**

1.  Anordnung zum Ueberwachen der Güte von elektrisch geschweissten Längsnähten an Zargen (10) zur Dosenherstellung, mit wenigstens einer Einrichtung (22) zum Ermitteln wenigstens eines ersten Schweissparameterprofils (F), mit einem Speicher (24) zum Speichern des ersten Schweissparameterprofils und mit einem Vergleicher (26) zum Vergleichen des ersten Schweissparameterprofils mit einem später gemessenen zweiten Schweissparameterprofil zum Bestimmen von deren Uebereinstimmungsgrad,
    dadurch **gekennzeichnet,**
    dass die genannte Einrichtung (22) eine Auswerteeinrichtung enthält zum statistischen Auswerten von gemessenen Schweissparameterwerten von über die Naht- bzw. Zargenlänge sich erstreckenden Profilen (F), wobei die Auswerteeinrichtung versehen ist
    - mit einer ersten Recheneinrichtung (22.1), die eingerichtet ist
      - zur Ermittlung eines mittleren Schweissparameterprofils ($F_m$) aus einer Anzahl von für gut befundenen Zargen (10),
      - zur Ermittlung der zu Punkten i des mittleren Schweissparameterprofils ($F_m$) gehörenden Standardabweichungen $\sigma_i$ der Schweissparameterwerte, und
      - zur Ermittlung des zweiten Schweissparameterprofils für anschliessend hergestellte Zargen,
    - mit einem Speicher (24) für das genannte mittlere Schweissparameterprofil ($F_m$) und die zugehörigen Standardabweichungen $\sigma_i$,
    - mit einer zweiten Recheneinrichtung (22.2) zur Ermittlung eines das mittlere Schweissparameterprofil ($F_m$) umhüllenden Auswurfgrenzbandes ($F_{g\pm}$), das als Produkt der aus dem mittleren Schweissparameterprofil ($F_m$) sich ergebenden Mittelwerte ($F_{mi}$) der Schweissparameterwerte ($F_m$) und der mit einem Empfindlichkeitsfaktor multiplizierten Standardabweichung $\sigma_i$ gebildet ist,
    und dass ferner der genannte Vergleicher (26) dazu eingerichtet ist, für die anschliessend hergestellten Zargen festzustellen, ob das für diese ermittelte zweite Schweissparameterprofil innerhalb des Auswurfgrenzbandes ($F_{g\pm}$) liegt.

2.  Anordnung nach Anspruch 1, dadurch gekennzeichnet, dass die Anzahl von für gut befundenen Zargen (10), mittels welchen die erste Recheneinrichtung (22.1) das mittlere Schweissparameterprofil ($F_m$)

7

ermittelt, 20 bis 100 beträgt.

**3.** Anordnung nach Anspruch 1 oder 2, dadurch gekennzeichnet, dass zur statistischen Auswertung die Schweisspunkte über Bereichen (A, B, C) der Schweissnaht zusammengefasst werden.

**4.** Anordnung nach Anspruch 3, dadurch gekennzeichnet, dass jeder Bereich (A, B, C) 10 bis 20 Schweisspunkte umfasst.

**5.** Anordnung nach einem der Ansprüche 1 bis 4, gekennzeichnet durch eine mit der zweiten Recheneinrichtung (22.2) verbundene Eingabeeinrichtung (22.3) für den Empfindlichkeitsfaktor (z).

**6.** Anordnung nach Anspruch 5, dadurch gekennzeichnet, dass die Eingabeeinrichtung (22.3) eine Suchtabelle umfasst, die eine Anzahl adressierbarer Empfindlichkeitsfaktoren ($z_1$, $z_2$) enthält.

**7.** Anordnung nach einem der Ansprüche 1 bis 6, dadurch gekennzeichnet, dass die zweite Recheneinrichtung (22.2) das Auswurfgrenzwertband ($F_{g\pm}$) aus den Beziehungen

$$F_{gi+} = F_{mi} + z_1 \cdot \sigma_i$$
$$F_{gi-} = F_{mi} - z_2 \cdot \sigma_i$$

berechnet, mit

$i =$ 1, 2, 3....n und

$F_{gi} =$ Auswurfgrenzwert im i-ten Punkt der Schweissnaht,

$F_{mi} =$ Mittelwert des Schweissparameters im i-ten Punkt der Schweissnaht,

$z_1 =$ Empfindlichkeitsfaktor oder reziprokes Mass der Empfindlichkeit für oberen Auswurfgrenzwert,

$z_2 =$ Empfindlichkeitsfaktor oder reziprokes Mass der Empfindlichkeit für unteren Auswurfgrenzwert,

$\sigma_i =$ Standardabweichung für den i-ten Punkt der Schweissnaht.

**8.** Anordnung nach einem der Ansprüche 1 bis 7, dadurch gekennzeichnet, dass der Empfindlichkeitsfaktor zwischen 2 und 5 liegt und vorzugsweise 4,54 beträgt.

**9.** Anordnung nach einem der Anbsprüche 1 bis 8, dadurch gekennzeichnet, dass der Vergleicher (26) ein vom Vergleichsergebnis abhängiges Ausgangssignal an eine Signalverarbeitungseinrichtung (30 - 40) abgibt.

**10.** Anordnung nach Anspruch 9, dadurch gekennzeichnet, dass die Signalverarbeitungseinrichtung (30 - 40) einen Zargenauswerfer (38) umfasst, der betätigt wird, wenn das gemessene zweite Schweissparameterprofil ausserhalb des Auswurfgrenzwertbandes ($F_{g\pm}$) liegt.

**11.** Anordnung nach Anspruch 9, dadurch gekennzeichnet, dass die Signalverarbeitungseinrichtung (30 - 40) einen Regler (40) zum korrigierenden Nachregeln des gemessenen Schweissparameters umfasst.

**12.** Anordnung nach einem der Ansprüche 7 bis 11, dadurch gekennzeichnet, dass gilt $z_1 \neq z_2$, so dass das Auswurfgrenzwertband ($F_{g\pm}$) das mittlere Schweissparameterprofil ($F_m$) asymmetrisch umhüllt.

**13.** Anordnung nach einem der Ansprüche 7 bis 11, dadurch gekennzeichnet, dass gilt $z_1 = z_2 = z$, so dass das Auswurfgrenzwertband ($F_{g\pm}$) das mittlere Schweissparameterprofil ($F_m$) symmetrisch umhüllt.

**Claims**

**1.** Arrangement for monitoring the quality of longitudinal electric welds on bodies (10) for the production of cans, having at least one device (22) for determining at least one first weld parameter profile (F), having a memory (24) to store the first weld parameter profile, and having a comparator (26) to compare the first weld parameter profile with a second weld parameter profile measured later, in order to determine their degree of agreement, characterised in that the said device (22) contains an evaluating device for the statistical evaluation of measured weld parameter values of profiles (F) extending the length of the weld, or can body, the evaluating device being provided:
- with a first calculating device (22.1) which is set up:
  - to determine an average weld parameter profile ($F_m$) from a number of can bodies (10) found to be good,
  - to determine the standard deviations $\sigma_i$ of the weld parameter values belonging to points i of the average weld parameter profile ($F_m$), and
  - to determine the second weld parameter profile for can bodies subsequently produced,
- with a memory (24) for the said average weld parameter profile ($F_m$) and the associated standard deviations $\sigma_i$,
- with a second calculating device (22.2) for determining a reject limiting-value band ($F_{g\pm}$) enveloping the average weld parameter profile ($F_m$) and constituted as the product of the mean values ($F_{mi}$) of the weld parameter values ($F_m$) resulting from the average weld parameter profile ($F_m$) and of a standard deviation $\sigma_i$ multiplied by a sensitivity factor,

and in that in addition the said comparator (26) is set up to ascertain, in respect of the can bodies subsequently produced, whether the second weld parameter profile determined for these lies within the reject limiting-value band ($F_{g\pm}$).

2. Arrangement according to claim 1, characterised in that the number of can bodies (10) found to be good, by means of which the first calculating device (22.1) determines the average weld parameter profile ($F_m$), is 20 to 100.

3. Arrangement according to claim 1 or 2, characterised in that the welding spots over regions (A, B, C) of the weld seam are combined for the statistical evaluation.

4. Arrangement according to claim 3, characterised in that each region (A, B, C) comprises 10 to 20 welding spots.

5. Arrangement according to any of claims 1 to 4, characterised by an input device (22.3) for the sensitivity factor (z), which is connected to the second calculating device (22.2).

6. Arrangement according to claim 5, characterised in that the input device (22.3) comprises a search table which contains a number of addressable sensitivity factors ($z_1$, $z_2$).

7. Arrangement according to any of claims 1 to 6, characterised in that the second calculating device (22.2) calculates the reject limiting-value band ($F_{g\pm}$) from the relationships

$$F_{gi+} = F_{mi} + z_1 \cdot \sigma_i$$
$$F_{gi-} = F_{mi} - z_2 \cdot \sigma_i$$

with i = 1, 2, 3...n and
$F_{gi}$ = reject limiting value in the i$^{th}$ spot of the weld seam,
$F_{mi}$ = mean value of the weld parameter in the i$^{th}$ spot of the weld seam,
$z_1$ = sensitivity factor or reciprocal quantity of the sensitivity for the upper reject limiting value,
$z_2$ = sensitivity factor or reciprocal quantity of the sensitivity for the lower reject limiting value,
$\sigma_i$ = standard deviation of the i$^{th}$ spot of the weld seam.

8. Arrangement according to any of claims 1 to 7, characterised in that the sensitivity factor is between 2 and 5 and is preferably 4.54.

9. Arrangement according to any of claims 1 to 8, characterised in that the comparator (26) delivers an output signal depending on the result of the comparison to a signal processing device (30 - 40).

10. Arrangement according to claim 9, characterised in that the signal processing device (30 - 40) comprises a can body rejector (38) which is actuated if the measured second weld parameter profile lies outside the rejecting limiting-value band ($F_{g\pm}$).

11. Arrangement according to claim 9, characterised in that the signal processing device (30 - 40) comprises a controller (40) to readjust the measured weld parameter with a correcting action.

**12.** Arrangement according to any of claims 7 to 11, characterised in that $z_1 \neq z_2$, with the result that the reject limiting-value band ($F_{g\pm}$) envelops the average weld parameter profile ($F_m$) asymmetrically.

**13.** Arrangement according to any of claims 7 to 11, characterized in that $z_1 = z_2 = z$, with the result that the reject limiting-value band ($F_{g\pm}$) envelops the average weld parameter profile ($F_m$) symmetrically.

**Revendications**

**1.** Dispositif pour contrôler la qualité de joints soudés longitudinaux sur des flans (10) pour la fabrication de boîtes, comportant au moins un dispositif (22) pour déterminer au moins un premier profil (F) d'un paramètre de soudage, une mémoire (24) pour mémoriser le premier profil du paramètre de soudage et un comparateur (26) pour comparer le premier profil du paramètre de soudage à un second profil du paramètre de soudage mesuré ultérieurement, pour déterminer leur degré de coïncidence, caractérisé en ce
que ledit dispositif (22) contient un dispositif d'évaluation pour réaliser l'évaluation statistique de valeurs mesurées du paramètre de soudage de profils (F) qui s'étendent sur la longueur du joint ou du flan, le dispositif d'évaluation comportant
- un premier dispositif de calcul (22.1), qui est agencé pour
  - pour déterminer un profil moyen ($F_m$) du paramètre de soudage à partir d'un nombre de flans (10) déterminés comme étant bons,
  - pour déterminer les écarts-types ($\sigma_i$) des valeurs du paramètre de soudage, qui sont associés à des points i du profil moyen ($F_m$) du paramètre de soudage, et
  - pour déterminer le second profil du paramètre de soudage pour des flans fabriqués ultérieurement,
- une mémoire (24) pour ledit profil moyen ($F_m$) du paramètre de soudage et les écarts-types associés ($\sigma_i$),
- un second dispositif de calcul (22.2) pour déterminer une bande limite de rejet ($F_{g\pm}$), qui entoure le profil moyen ($F_m$) de paramètre de soudage et qui est formée en tant que produit des moyennes ($F_{mi}$), obtenues à partir du profil moyen ($F_m$) du paramètre de soudage, des valeurs de ce paramètre et de l'écart-type ($\sigma_i$) multiplié par un facteur de sensibilité, et
qu'en outre ledit comparateur (26) est agencé pour déterminer, pour les flans formés ultérieurement, si le second profil du paramètre de soudage, déterminé pour ces flans, se situe à l'intérieur de la bande de valeurs limites de rejet ($F_{g\pm}$).

**2.** Dispositif selon la revendication 1, caractérisé en ce que le nombre de flans (10) considérés comme bons, au moyen desquels le premier dispositif de calcul (22.1) détermine le profil moyen ($F_m$) du paramètre de soudage, est compris entre 20 et 100.

**3.** Dispositif selon la revendication 1 ou 2, caractérisé en ce que pour l'évaluation statistique, on rassemble les points de soudure dans des zones (A, B, C) du joint soudé.

**4.** Dispositif selon la revendication 3, caractérisé en ce que chaque zone (A, B, C) comprend dix à vingt points de soudure.

**5.** Dispositif selon l'une des revendications 1 à 4, caractérisé par un dispositif d'entrée (22.3), qui est raccordé par le second dispositif de calcul (22.2), pour le facteur de sensibilité (z).

**6.** Dispositif selon la revendication 5, caractérisé en ce que le dispositif d'entrée (22.3) comprend un tableau de recherche, qui contient un nombre de facteurs de sensibilité adressables ($z_1$, $z_2$).

**7.** Dispositif selon l'une des revendications 1 à 6, caractérisé en ce que le second dispositif de calcul (22.2) calcule la bande de valeurs limites de rejet ($F_{g\pm}$) à partir des relations

$$F_{gi+} = F_{mi} + z_1 \cdot \sigma_i$$
$$F_{gi-} = F_{mi} - z_2 \cdot \sigma_i$$

avec
i = 1, 2, 3...n, et

$F_{gi}$ = valeur limite de rejet au i-ème point du joint soudé,

$F_{mi}$ = valeur moyenne du paramètre de soudage au i-ème point du joint soudé,

$z_1$ = facteur de sensibilité ou inverse de la valeur de la sensibilité pour la valeur limite supérieure de rejet,

$z_2$ = sensibilité ou inverse de la valeur de la sensibilité pour la valeur limite inférieure de rejt,

$\sigma_i$ = écart-type pour le i-ème point du joint soudé.

8.  Dispositif selon l'une des revendications 1 à 7, caractérisé en ce que le facteur de sensibilité est compris entre 2 et 5 et de préférence égal à 4,54.

9.  Dispositif selon l'une des revendications 1 à 8, caractérisé en ce que le comparateur (26) délivre un signal de sortie, qui dépend du résultat de la comparaison, à un dispositif de traitement de signaux (30-40).

10. Dispositif selon la revendication 9, caractérisé en ce que le dispositif de traitement de signaux (30-40) comprend un dispositif (38) d'éjection des flans, qui est actionné lorsque le second profil mesuré du paramètre de soudage se situe à l'extérieur de la bande de valeurs limites de rejet ($F_{g\pm}$).

11. Dispositif selon la revendication 9, caractérisé en ce que le dispositif de traitement de signaux (30-40) comprend un régulateur (40) pour réaliser un réglage ultérieur de correction du paramètre de soudage mesuré.

12. Dispositif selon l'une des revendications 7 à 11, caractérisé en ce que l'on a ($z_1 \neq z_2$) de sorte que la bande de valeurs limites de rejet ($F_{g\pm}$) enveloppe de façon dissymétrique le profil moyen ($F_m$) du paramètre de soudage.

13. Dispositif selon l'une des revendications 7 à 11, caractérisé en ce que l'on a $z_1 = z_2 = z$, de sorte que la bande de valeurs limites de rejet ($F_{g\pm}$) enveloppe d'une manière symétrique le profil moyen ($F_m$) du paramètre de soudage.

**Fig. 1**

**20**
Messwertaufbereitungseinrichtung

**22**
Statistische
Auswerteeinrichtung

$F_i$

$F_i$

Fg+   Fg-

$F_i$

**26**
Vergleicher

**30** Drucker

**32** Anzeige

**34** ⊗ "gut"

**36** ⊗ "schlecht"

**27**

**38** Auswerfer

**40** Regler

**Fig. 2**

**22.4**   **22.5**

$E_1$   $E_2$

**22**

erste
Recheneinrichtung
$F_m \cdot \sigma_i$   **22.1**

Suchtabelle   **22.3**

$F_i$

$Z_1$   $Z_2$

**24**
Speicher

**22.2**
zweite Recheneinrichtung
$F_{g\pm} = F_{mi} + Z_1 \cdot \sigma_i - Z_2 \cdot \sigma_i$

zum Vergleicher

12

**Fig. 3**

**Fig. 4**

## Fig. 5a

```
##########            +++            ##########        Sensor 1
##########            +++            ##########

##########           *****           ##########        Sensor 2
##########           *****           ##########
               Empfindlichkeit: 1000
```

## Fig. 5b

```
 ####              +++++++              ####          Sensor 1
 ####              +++++++              ####

 ####            ***********            ####          Sensor 2
 ####            ***********            ####
               Empfindlichkeit: 100
```

## Fig. 5c

```
###########         +++              ##########       Sensor 1
###########         +++              ##########

###########              *****       ##########       Sensor 2
###########              *****       ##########
               Empfindlichkeit: 1000
```

## Fig. 5d

```
##########       +++++++++++++##########             Sensor 1
##########       +++++++++++++##########

##########      *************       ##########       Sensor 2
##########      *************       ##########
               Empfindlichkeit: 1000
```